# EUROPÄISCHE PATENTSCHRIFT

(11) **EP 0 503 376 B1**
(45) Veröffentlichungstag und Bekanntmachung des Hinweises auf die Patenterteilung: **29.07.1998**
(21) Anmeldenummer: 92103313.0
(22) Anmeldetag: 27.02.1992
(51) Int. Cl.: C08L 79/04, C08K 5/28, C08K 5/54

(54) **Lösungen von Polykondensaten, welche als Struktureinheiten N-enthaltende heterocyclische Ringsysteme aufweisen, mit verbesserter Haftung auf anorganischen Substraten**
Solutions of polycondensates which contain N-heterocycles as structural units and show good adhesion on inorganic substrates
Solutions de polycondensats contenant comme unité structurale des N-hétérocycles et ayant une bonne adhésion sur des substrats inorganiques

(30) Priorität: 09.03.1991 DE 4107664
(43) Veröffentlichungstag der Anmeldung: 16.09.1992
(73) Patentinhaber: BASF Coatings Aktiengesellschaft, 48165 Münster (DE)
(72) Erfinder: Blum, Rainer, W-6700 Ludwigshafen (DE); Heller, Hans Joachim, Dr., W-2000 Hamburg 55 (DE); Haehnle, Hans-Joachim, Dr., W-6700 Ludwigshafen (DE); Lienert, Klaus, Dr., W-2000 Hamburg 50 (DE)
(74) Vertreter: Münch, Volker, Dr.

(56) Entgegenhaltungen:
- EP-A- 0 304 022
- GB-A- 1 516 193
- JP-A- 3 012 346
- PATENT ABSTRACTS OF JAPAN vol. 15, no. 128 (C-818)28. März 1991 & JP-A-3 012 346 ( NITTO BOSEKI CO ) 21. Januar 1991

## Beschreibung

Die Erfindung betrifft Lösungen von Polykondensaten, welche als Struktureinheiten heterocyclische Ringsysteme mit N-Atomen aufweisen, oder Lösungen von Polyamidsäuren dieser Polykondensate, bei denen der Ringschluß zum Polyimid noch nicht geschlossen ist, in organischen Lösungsmitteln, enthaltend 0,1 bis 20 Gew.-%, bezogen auf die Polykondensate oder deren vorstufen, mindestens eines Azidosilans der allgemeinen Formel

N₃-R³-Si-R¹ ₙ(OR²)₃₋ₙ I

worin R¹ für eine C₁-C₃-Alkyl-, eine Phenyl-, Benzyl- oder Toluylgruppe, R² für eine C₁-C₄-Alkyl-, C₂-C₄-Alkoxyalkyl-, eine Phenyl- oder Benzylgruppe, R³ für eine C₁-C₈-Alkylengruppe, welche durch ein Sauerstoffatom, Schwefelatom oder eine -(N-R⁴)-Gruppe, worin R⁴ ein Wasserstoff, eine Methyl-, Ethyl- oder Phenylgruppe bedeutet, unterbrochen sein kann, und n für 0,1 oder 2 steht.

Polyimide werden in zunehmendem Maße für Beschichtungen von Metalldrähten, Glas- und Quarzfasern, sowie Substraten aus Silicium, gegebenenfalls mit modifizierten Oberflächen aus Siliciumdioxid-, bzw. -nitrid eingesetzt, da die Anforderungen an die Temperaturbeständigkeit solcher Beschichtungen z.B. in der Elektronik und Mikroelektronik ständig gestiegen sind.

Um eine ausreichende Haftung von Polyimidbeschichtungen zu gewährleisten, müssen die anorganischen Substrate mit sog. Haftvermittlern vorbehandelt werden. Als Haftvermittler werden üblicherweise Aminoalkoxysilane eingesetzt, die in Form ihrer verdünnten alkoholischen oder alkoholische/wäßrigen Lösungen auf das anorganische Substrat aufgebracht werden.

Nach Entfernung des Lösungsmittels können erst in einem weiteren Arbeitsschritt das Polyimid bzw. dessen lösliche Vorstufen aufgetragen werden.

In EP-A-0 304 022 werden Beschichtungsmittel beschrieben, die aus homogenen Lösungen von Polyimiden oder Polyimidvorläufern in aprotischen Lösungsmitteln bestehen, denen als Haftvermittler ein Aminosilan zugesetzt wurde.

Neben Aminoalkoxysilanen sind auch Azidosilane als Haftvermittler von Interesse.

In der US-A-3 705 911 werden Silyl-azidoformate beschrieben, die zur verbesserung der Haftung von Polymeren auf anorganischen Substraten eingesetzt werden.

Aus der GB-B-1 377 214 und GB-B-1 516 193 sind ähnliche Azidoformate als Haftvermittler bekannt.

Gegenstand der EP-B-50 768 ist ein Verfahren zur Herstellung von Azidosilanen der allgemeinen Formel

N₃-R³-Si-R¹ ₙ(OR²)₃₋ₙ,

wobei die Reste R¹ bis R³ die oben genannte Bedeutung haben und z.B. für kurzkettige Alkyl- bzw. Alkylenreste stehen können.

Aufgabe der vorliegenden Erfindung war es, die Haftung von Polyimiden auf anorganischen Substraten zu verbessern, ohne daß die anorganischen Substrate mit einem Haftvermittler vorbehandelt werden müssen.

Demgemäß wurden die oben definierten Lösungen gefunden.

Die erfindungsgemäßen Lösungen enthalten Polykondensate, welche als Struktureinheiten heterocyclische Ringsysteme mit N-Atomen aufweisen, oder Vorstufen dieser Polykondensate.

In Betracht kommende Polykondensate sind z.B. Polybenzimidazole, Polybenzthiazole, Polybenzoxazole, Polyoxazindione, Polychinazolindione, Polyisoindolochinazolindione. Verfahren zur Herstellung dieser Polykondensate sind z.B. aus der DE-A-29 33 826 und der DE-A-23 11 659 zu entnehmen.

Bei den Polyoxazindionen handelt es sich um Polykondensate mit sich wiederholenden Struktureinheiten 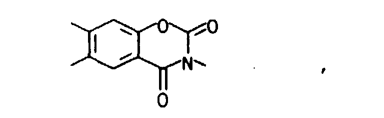 welche durch Umsetzung von Dihydroxydicarbonsäuren und Diisocyanaten erhältlich sind.

Die Polychinazolindione enthalten wiederkehrende Struktureinheiten 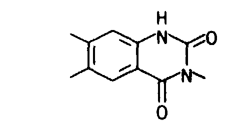 und sind durch Umsetzung von Diaminodicarbonsäuren und Diisocyanaten erhältlich.

Die Polyisoindolochinazolindione weisen wiederkehrende Struktureinheiten 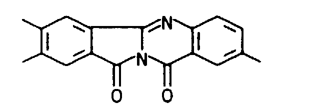 auf und sind durch Umsetzung von Tetracarbonsäuredianhydriden mit o-Aminoamiden erhältlich.

Wiederkehrende Struktureinheiten in den Polybenzoxazolen (-thiazolen) sind 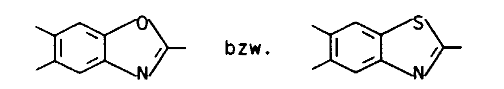 Die Polybenzoxazole (-thiazole) können z.B. durch Umsetzung von Dicarbonsäuren mit Di-o-Aminophenolen bzw. -thiophenolen erhalten werden.

Die Polybenzimidazole weisen wiederkehrende Struktureinheiten 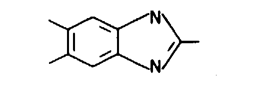 auf und entstehen bei der Umsetzung von Di-(o-diaminen) mit Dicarbonsäuren.

Bevorzugte Polykondensate mit N-enthaltenden heterocyclischen Ringsystemen sind Polyimide mit wiederkehrenden Struktureinheiten 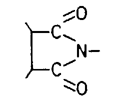 welche z.B. durch Umsetzung von Tetracarbonsäuredianhydriden mit Diaminen oder Diisocyanaten erhältlich sind.

Bevorzugt sind ebenfalls Vorstufen der Polyimide. Bei diesen Vorstufen handelt es sich um Polyamidsäuren mit wiederkehrenden Struktureinheiten 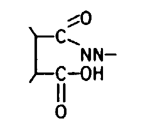 bei denen der Ringschluß zum Polyimid noch nicht vollzogen ist.

Vorzugsweise enthält zumindest jeweils eine der Ausgangsverbindungen, aus denen die Polykondensate bzw. deren Vorstufen hergestellt werden können, aliphatische Kohlenstoffatome. Es kann sich dabei um aliphatische Verbindungen, z.B. aliphatische Diamine oder Diisocyanate oder um aromatische Verbindungen handeln, welche aliphatische Kohlenstoffatome z.B. als Alkyl- oder Alkoxysubstituenten an aromatischen Ringsystemen oder Alkylenbrücken zwischen aromatischen Ringsystemen, aufweisen.

Besonders geeignete Tetracarbonsäuredianhydride, aus denen Polyimide bzw. Polyamidsäuren erhältlich sind, sind solche mit insgesamt 8 bis 20 C-Atomen bei aliphatischen und 10 bis 20 C-Atomen bei aromatischen Tetracarbonsäuredianhydriden. Bevorzugt sind Dianhydride von aromatischen Tetracarbonsäuren, insbesondere von Pyromellitsäure, 3,3',4,4'-Diphenyltetracarbonsäure, 2,2'4,4'-Diphenyltetracarbonsäure, Di(dicarboxydiphenyl)methane, Di(dicarboxydihydroxyphenyl)methane oder Benzophenontetracarbonsäure.

Besonders geeignete Diaminoverbindungen, aus denen Polyimide bzw. Polyamidsäuren erhältlich sind, weisen insgesamt 2 bis 20 C-Atome bei aliphatischen und 6 bis 20 C-Atome bei aromatischen Diaminoverbindungen auf. Bevorzugt sind aromatische Diaminoverbindungen, insbesondere 4,4'-Diaminodiphenyloxid, 3,3'-Dimethylbenzidin, 3,3'-Dimethoxibenzidin, 4,4'-Diaminobenzophenon, 4,4'-Diaminobiphenyl und 4,4'-Isopropylendianilin, Diaminotoluole, 4,4'-Diaminodiphenylmethan und 2,2-Bis-4(4-aminophenoxy)phenylpropan.

Bei geeigneten bzw. bevorzugten Diisocyanaten für die Herstellung von Polyimiden handelt es sich bevorzugt um den Diaminen entsprechende Diisocyanate, welche statt der Aminogruppen Isocyanatgruppen enthalten. Es kommen auch Diisocyanate in Betracht, die neben den Isocyanatgruppen noch Aminogruppen enthalten, z.B. 9,9-Bis(4-aminophenyl)fluorendiisocyanat.

Für den Fall, daß sowohl die Diamino- bzw. Diisocyanatoverbindung als auch das Tetracarbonsäureanhydrid als Ausgangsverbindungen für die Polyimide oder Polyamidsäuren aromatische Verbindungen sind, enthält vorzugsweise zumindest eine der Ausgangsverbindungen aliphatische Kohlenstoffatome, insbesondere als C₁-C₅-Alkyl-, -Alkoxy-, -Hydroxyalkylsubstituenten an einem aromatischen Ringsystem oder als C₁-C₄-Alkylenbrücke zwischen zwei aromatischen Ringsystemen.

Die Polykondensate oder ihre Vorstufen können auch ethylenisch ungesättigte Gruppen enthalten, so daß eine Aushärtung der Beschichtungen auch photochemisch erfolgen kann. Zum Beispiel können ungesättigte Alkohole wie Allylalkohol mit Tetracarbonsäuredianhydriden umgesetzt werden, um so ungesättigte Gruppen an das Polymer zu binden.

Insbesondere hat sich in diesem Fall ein Gehalt von 0,01 bis 2 Mol, bevorzugt 0,05 bis 1,5 Mol ethylenisch ungesättigter Gruppen, bezogen auf 500 g Polykondensat bzw. dessen Vorstufen, als geeignet erwiesen.

Eine andere Möglichkeit, die Polykondensate bzw. ihre Vorstufen strahlenvernetzbar zu machen, ist der Einbau von Benzophenon bzw. dessen Derivate in das Polymergerüst. Der Gehalt dieser Carbonylverbindungen beträgt im Falle einer gewünschten photochemischen Vernetzung ebenfalls 0,01 bis 2 Mol, bevorzugt 0,05 bis 1,5 Mol, bezogen auf 500 g Polykondensat bzw. dessen Vorstufen.

Der Gehalt der erfindungsgemäßen Lösungen an Polykondensaten mit N-enthaltenden heterocyclischen Ringsystemen oder deren Vorstufen wird im allgemeinen so gewählt, daß sich die für die Verarbeitung gewünschte Viskosität einstellt. Als geeignet haben sich vielfältig Konzentrationen zwischen 5 und 80, insbesondere zwischen 10 und 60 Gew.-%, erwiesen.

Je nach Molekulargewicht und Löslichkeit der Polykondensate bzw. ihrer Vorstufen kommen organische Lösungsmittel unterschiedlicher Polarität in Betracht.

Als geeignete Lösungsmittel insbesondere auch für Polyimide bzw. Polyamidsäuren haben sich phenolische Lösungsmittel, z.B. Kresol und amidische Lösungsmittel, wie Dimethylformamid, Dimethylacetamid oder N-Methylpyrrolidon erwiesen.

Die erfindungsgemäßen Lösungen enthalten weiterhin 0,1 bis 20 Gew.-%, bevorzugt 0,2 bis 10 Gew.-%, besonders bevorzugt 0,2 bis 5 Gew.-%, ganz besonders bevorzugt 0,2 bis 3 Gew.-%, bezogen auf die Polykondensate bzw. deren Vorstufen mindestens eines Azidosilans der allgemeinen Formel

N₃-R³-Si-R¹ ₙ(OR²)₃₋ₙ I

worin R¹ für eine C₁-C₃-Alkyl-, eine Phenyl-, Benzyl- oder Toluylgruppe, R² für eine C₁-C₄-Alkyl-, C₂-C₄-Alkoxyalkyl-, eine Phenyl- oder Benzylgruppe, R³ für eine C₁-C₈-Alkylengruppe, welche durch ein Sauerstoffatom, Schwefelatom oder eine -(N-R⁴)-Gruppe, worin R⁴ ein Wasserstoff, eine Methyl-, Ethyl- oder Phenylgruppe bedeutet, unterbrochen sein kann, und n für 0,1 oder 2 steht.

Bevorzugt sind aliphatische Azidosilane, insbesondere solche, in denen R² eine C₁-C₄-Alkylgruppe, R³ eine C₁-C₆-Alkylengruppe und n=0 ist. Ganz besonders bevorzugt ist 3-Azidopropyltriethoxysilan.

Zusätzlich können die erfindungsgemäßen Lösungen noch Alkanolamine enthalten, welche die Haftung auf anorganischen Substraten noch verstärken können. Besonders geeignet sind Alkanolamine der allgemeinen Formel

(HO-R⁵-)ₘNH₃₋ₘ

wobei R⁵ für einen C₁-C₆-Alkylenrest steht und m=1, 2 oder 3 ist. Ihr Gehalt liegt vorzugsweise zwischen 0,1 bis 5, besonders bevorzugt zwischen 0,2 bis 2 Gew.-%, bezogen auf die Polykondensate bzw. deren Vorstufen.

Im weiteren können die Lösungen z.B. noch übliche Hilfsmittel, wie Verlaufsmittel, Netzmittel, Katalysatoren für die Aushärtung, z.B. Photoinitiatoren bei photochemischer Vernetzung und Stabilisatoren enthalten.

Zur Herstellung der Lösungen können die einzelnen Bestandteile in einem geeigneten organischen Lösungsmittel oder Lösungsmittelgemisch gelöst werden. Es kann so verfahren werden, daß die Polykondensate bzw. deren Vorstufen zunächst in dem organischen Lösungsmittel hergestellt werden, z.B. sind Polyimide bzw. Polyamidsäuren durch Umsetzung von Tetracarbonsäuredianhydriden mit Diaminoverbindungen gegebenenfalls in Gegenwart von tertiären Aminen oder zinnorganischen Verbindungen als Katalysatoren in den oben genannten polaren Lösungsmitteln erhältlich. Anschließend können dann die Azidosilane und auch gegebenenfalls weitere Hilfs- und Zusatzstoffe in die Lösung gegeben werden.

Eine Verbesserung der Haftungswirkung kann noch erreicht werden, wenn die erfindungsgemäßen Lösungen vor ihrer weiteren Verarbeitung erhitzt werden.

Geeignet ist eine Temperatur von 40 bis 100°C, insbesondere 50 bis 70°C für die Dauer von 10 bis 120, insbesondere 30 bis 60 Minuten.

Die erfindungsgemäßen Lösungen eignen sich für gut haftende Beschichtungen auf anorganischen Substraten, z.B. auf Metallen in Form von Metalldrähten, Glas- und Quarzfasern, sowie Silicium (Wafern). Besonders vorteilhaft ist die Haftung auf Substraten auf Basis von Silicium. Insbesondere kann auch auf oberflächenmodifiziertem Silicium (Siliciumdioxid- bzw. Siliciumnitridoberfläche durch Behandlung mit Sauerstoff bzw. Stickstoff) eine sehr gute Haftung der Beschichtung erreicht werden.

Die anorganischen Substrate brauchen nicht, wie bisher bei Verwendung von Aminoalkoxysilanen notwendig, mit Haftvermittlern vorbehandelt zu werden.

Nach dem Auftragen kann das Lösungsmittel entfernt und gegebenenfalls die Beschichtung durch Temperaturerhöhung bzw. Bestrahlung mit energiereichem Licht ausgehärtet werden. Polyamidsäuren können nach Auftragung durch Temperaturerhöhung in Polyimide überführt werden.

### Beispiel 1: Polyamidsäurelösung

### Herstellung der Polyamidsäurelösung

In einem trockenen Dreihalskolben wurden 0.25 Mol (102.75 g) 2.2-Bis-(4-(4-aminophenoxy)phenylpropan in 471.75 g N-Methylpyrrolidon bei Raumtemperatur gelöst. Diese Lösung wurde unter einem leichten Strom von getrocknetem Stickstoff auf 50°C erwärmt, dann wurden insgesamt 0.25 Mol (54.5 g) Pyromellithsäureanhydrid in zehn ungefähr gleichen Portionen in Abständen von 10 Minuten eingerührt. Es wurde eine Stunde bei 60°C weitergerührt und auf Raumtemperatur abgekühlt.

### Herstellung der Lacke L1 bis L5 und V1 bis V4

Der Polyamidsäurelösung wurden 3-Azidopropyltriethoxysilan (3AZPS) bzw. 3-Aminopropyltriethoxysilan (3AMPS) und Diethanolamin (DEA) bei Raumtemperatur zugesetzt (Tabelle 1). Die Lösung wurde gegebenenfalls nach Zugabe des Haftvermittlers, jedoch bevor DEA zugesetzt wurde, für 1 Stunde bei der in der Tabelle 1 angegebenen Temperatur gehalten.

### Prüfung

Wafer aus Reinstsilicium wurden im Sauerstoffplasma an ihrer Oberfläche zu SiO₂ oxidiert. Auf diese Wafer wurden die Lacke mit einem Spincoater aufgeschleudert, wobei die Drehzahl des Spincoaters so gewählt wurde, daß die Beschichtungen eine Schichtdicke von 10 ± 2µm aufweisen. Die Prüflinge wurden 30 Minuten bei 90°C getrocknet und anschließend durch Erhitzen auf 350°C für die Dauer von einer Stunde die Imidisierung der Polyamidsäure durchgeführt.

Die Prüflinge wurden dann 48 Stunden bei Raumklima gelagert und danach 4 Stunden in VE-Wasser gekocht. Sofort nach der Entnahme wurden die Prüflinge abgetrocknet, mit einem scharfen Messer in 1 mm Abständen eingeritzt und die Haftung mit Tesa-Film geprüft. Die Beurteilung erfolgte nach einem internen Schlüssel, wobei die Noten 2 bis 4 Zwischenstufen zwischen Note 1=perfekte Haftung und Note 5=rückstandsfreie Enthaftung, bedeuten (Tabelle 1).

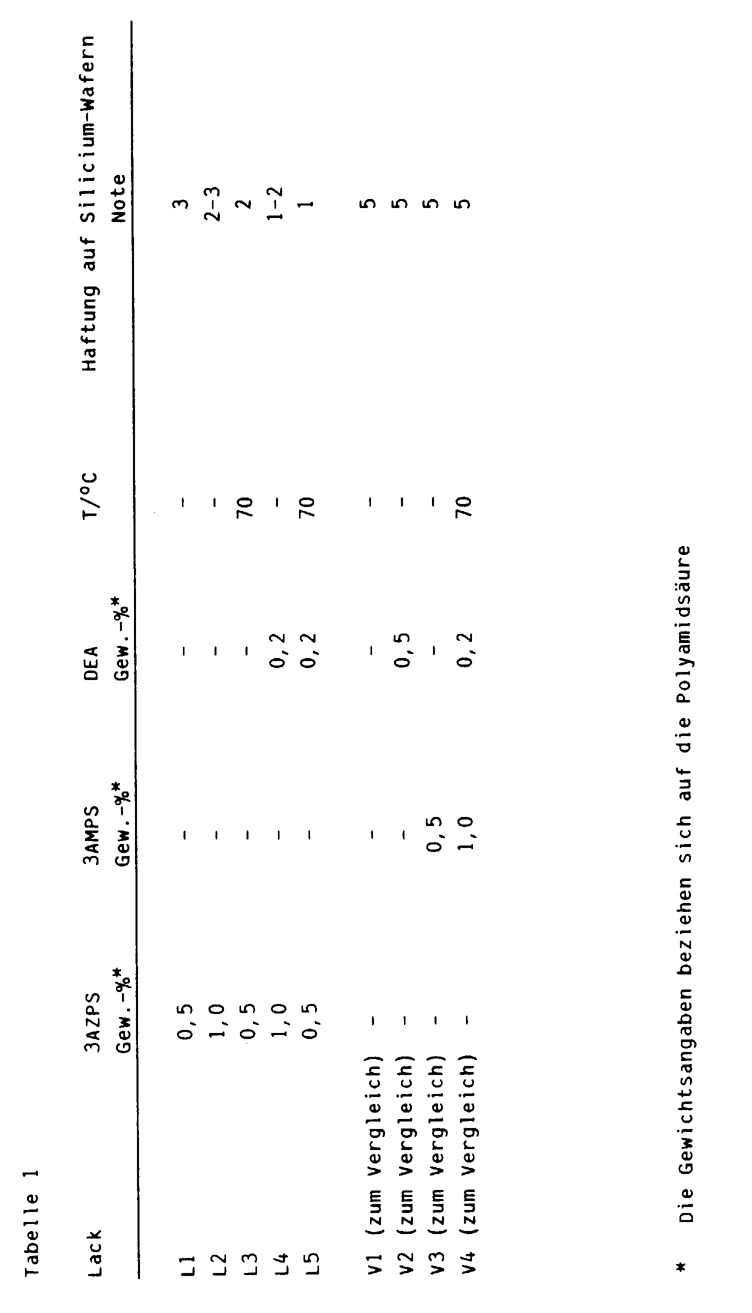

Zur Prüfung der Lagerstabilität wurden die Lacke bei Raumtemperatur gelagert und als Maß für die Viskositätsstabilität die Zeit bis zur Verdoppelung der Anfangsviskosität bestimmt. Zur Prüfung des verbleibenden haftungsverbessernden Effekts wurden nach 10 und 20 Tagen Haftungsprüfungen auf Silicium-Wafern wie oben beschrieben durchgeführt.

**Tabelle 2**

| Lack | Haftung auf Silicium-Wafern | | | Verdoppelung der Anfangsviskosität des Lacks nach |
|---|---|---|---|---|
| | gleich nach Herstellung des Lacks | 10 Tage später | 20 Tage später | Wochen |
| L1 | 3 | 3 | 4 | 22 |
| L2 | 2-3 | 2-3 | 3-4 | 22 |
| L3 | 2 | 2 | 2-3 | 38 |
| L4 | 1-2 | 2 | 3 | 12 |
| L5 | 1 | 1 | 1-2 | 32 |
| | | | | |
| V1 | 5 | 5 | 5 | 34 |
| V2 | 5 | 5 | 5 | 8 |
| V3 | 5 | 5 | 5 | 10 |
| V4 | 5 | 5 | 5 | 8 |

### Beispiel 2: Polyimidlösung

### Herstellung der Polyimidlösung

In einem trockenen Dreihalskolben wurden 0.25 Mol (80.5 g) Bezophenontetracarbonsäuredianhydrid in 254 g N-Methylpyrrolidon (NMP) bei Raumtemperatur gelöst. Unter getrocknetem Stickstoff wurde auf 70°C erwärmt, dann wurde in 2 Stunden eine Lösung von 0.25 Mol (101 g) 9.9-Bis(4-aminophenyl)fluorendiisocyanat in 254 g NMP zugetropft; es setzte eine Gasentwicklung ein. Nach Zulaufende wurde die Lösung eine Stunde bei 140°C gehalten und dann abgekühlt.

Es wurde eine braune Harzlösung erhalten. Die Säurezahl betrug 7. Ein Aufstrich auf Kaliumbromid zeigte im IR-Spektrum bei 1770 CM⁻¹ die für PI typische Bande.

### Herstellung der Lacke L6 bis L11 und V5 bis V7 und Prüfung der Lacke

Die Herstellung der Lacke und die Prüfung auf Haftung erfolgte wie bereits oben beschrieben. In Tabelle 3 sind die Gewichtsanteile des Haftvermittlers und Ergebnisse der Haftungsprüfung aufgelistet. Nach Zugabe des Haftvermittlers wurde die Lösung gegebenenfalls bei der ebenfalls in Tabelle 3 angegebenen Temperatur für eine Stunde gehalten.

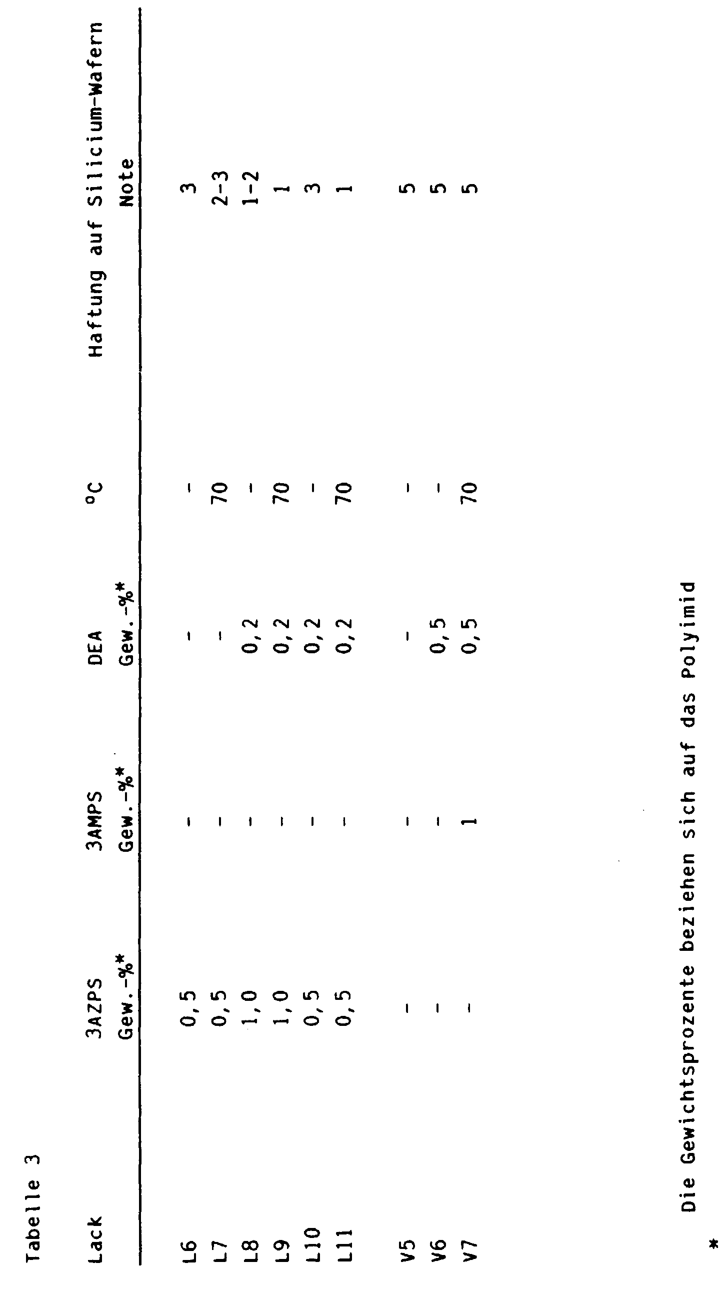

Die nach Lagerung verbleibende Haftung wurde ebenfalls wie oben beschrieben geprüft.

**Tabelle 4**

| Lack | Haftung auf Silicium-Wafern | | |
|---|---|---|---|
| | gleich nach Herstellung des Lacks | 10 Tage später | 20 Tage später |
| L6 | 3 | 3 | 4 |
| L7 | 2 | 2 | 2-3 |
| L8 | 1-2 | 2 | 2-3 |
| L9 | 1 | 1 | 1 |
| L10 | 3 | 3 | 4 |
| L11 | 1 | 1 | 1 |
| | | | |
| V5 | 5 | 5 | 5 |
| V6 | 5 | 5 | 5 |
| V7 | 5 | 5 | 5 |

## Patentansprüche

1. Lösungen von Polykondensaten, welche als Struktureinheiten heterocyclische Ringsysteme mit N-Atomen aufweisen, oder Lösungen von Polyamidsäuren mit wiederkehrenden Struktureinheiten 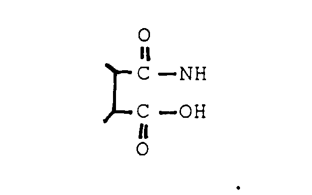 bei denen der Ringschluß zum Polyimid noch nicht geschlossen ist, in organischen Lösungsmitteln, enthaltend 0,1 bis 20 Gew.-%, bezogen auf die Polykondensate oder die Polyamidsäuren, mindestens eines Azidosilans der allgemeinen Formel
N₃-R³-Si-R¹ ₙ(OR²)₃₋ₙ I
worin R¹ für eine C₁- bis C₁-C₃-Alkyl-, eine Phenyl-, Benzyl- oder Toluylgruppe, R² für eine C₁- bis C₁-C₄-Alkyl-, C₂- bis C₄-Alkoxyalkyl-, eine Phenyl- oder Benzylgruppe, R³ für eine C₁- bis C₁-C₈-Alkylengruppe, welche durch ein Sauerstoffatom, Schwefelatom oder eine -(N-R⁴)-Gruppe, worin R⁴ ein Wasserstoffatom, eine Methyl-, Ethyl- oder Phenylgruppe bedeutet, unterbrochen sein kann, und n für 0, 1 oder 2 steht.

2. Lösungen gemäß Anspruch 1, wobei es sich bei den Polykondensaten um Polyimide handelt.

3. Lösungen gemäß Anspruch 1, enthaltend ein Azidosilan der Formel I, worin R² für eine C₁- bis C₁-C₄-Alkylgruppe und R³ für eine C₁- bis C₁-C₆-Alkylengruppe steht und n=0 ist.

4. Verfahren zur Verbesserung der Haftung von Polykondensaten, welche als Struktureinheiten heterocyclische Ringsystemen mit N-Atomen aufweisen, auf anorganischen Substraten, dadurch gekennzeichnet, daß den Lösungen der Polykondensate oder den Lösungen der Polyamidsäuren mit wiederkehrenden Struktureinheiten 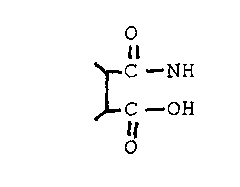 bei denen der Ringschluß zum Polyimid noch nicht geschlossen ist, in organischen Lösungsmitteln Azidosilane der allgemeinen Formel I zugesetzt werden und die erhaltenen Lösungen auf die anorganischen Substrate aufgetragen werden.

5. Verwendung von Lösungen gemäß einem der Ansprüche 1 bis 3 zur Beschichtung von anorganischen Substraten.

6. Verwendung gemäß Anspruch 5, wobei es sich bei den anorganischen Substraten um Substrate aus Silicium, Siliciumdioxid oder Siliciumnitrid handelt.

## Claims

1. A solution of polycondensate which has N-containing heterocyclic ring systems as structural units, or a solution of polyamic acids with repeating structural units 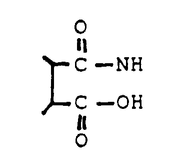 in which cyclization with the polyimide is not yet finished, in an organic solvent, containing from 0.1 to 20% by weight, based on the polycondensate or the polyamic acids, of one or more azidosilanes of the formula
N₃-R³-Si-R¹ ₙ(OR²)₃₋ₙ I
where R¹ is C₁-C₃-alkyl, phenyl, benzyl or toluyl, R² is C₁-C₄-alkyl, C₂-C₄-alkoxyalkyl, phenyl or benzyl, R³ is C₁-C₈-alylene [sic] which may be interrupted by an oxygen atom, a sulfur atom or a -(N-R⁴)-group, where R⁴ is hydrogen, methyl, ethyl or phenyl, and n is 0, 1 or 2.

2. A solution as claimed in claim 1, wherein the polycondensate is a polyimide.

3. A solution as claimed in claim 1, containing an azidosilane of the formula I, where R² is C₁-C₄-alkyl and R³ is C₁-C₆-alkylene and n is 0.

4. A process for improving the adhesion of polycondensates, which have N-containing heterocyclic ring systems as structural units, to inorganic substrates, wherein an azidosilane of the formula I is added to the solution of the polycondensate or the solution of the polyamic acids with repeating structural units 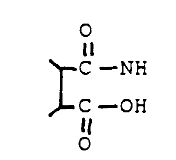 in which cyclization with the polyimide is not yet finished, in an organic solvent, and the resulting solution is applied to the inorganic substrate.

5. The use of a solution as claimed in one of claims 1 to 3 for coating an inorganic substrate.

6. The use as claimed in claim 5, wherein the inorganic substrate is a substrate of silicon, silicon dioxide or silicon nitride.

## Revendications

1. Solutions de polycondensats, présentant, en tant qu'unités structurales, des systèmes N-hétérocycliques, ou des solutions d'acides polyamidiques ayant des unités structurales récurrentes 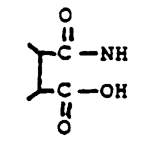 pour lesquelles la cyclisation en polyimide n'est pas encore achevée, dans des solvants organiques, contenant de 0,1 à 20 % en poids, par rapport aux polycondensats ou aux acides polyamidiques, d'au moins un azidosilane de formule générale
N₃-R³-Si-R¹ ₙ(OR²)₃₋ₙ I
R¹ désignant un groupement alkyle en C₁ à C₃, un groupement phényle, benzyle ou tolyle, R² désignant un groupement alkyle en C₁ à C₄, un groupement alkoxyalkyle en C₂ à C₄, un groupement phényle ou benzyle, R³ désignant un groupement alkylène en C₁ à C₈, qui peut être interrompu par un atome d'oxygène, un atome de soufre ou un groupement -(N-R⁴), R⁴ représentant un atome d'hydrogène, un groupement méthyle, éthyle ou phényle, et n désignant 0, 1 ou 2.

2. Solutions selon la revendication 1, dans lequelles les polycondensats sont des polyimides.

3. Solutions selon la revendication 1, contenant un azidosilane de formule I, R² désignant un groupement alkyle en C₁ à C₄ et R³ désignant un groupement alkylène en C₁ à C₆ et n = 0.

4. Procédé d'amélioration de l'adhésion de polycondensats, qui présentent, en tant qu'unités structurales, des systèmes N-hétérocycliques, sur des substrats inorganiques, caractérisé en ce que l'on ajoute, aux solutions des polycondensats ou aux solutions des acides polyamidiques ayant des unité structurales récurrentes 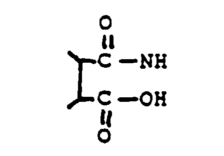 pour lesquelles la cyclisation en polyimide n'est pas encore achevée, dans des solvants organiques, des azidosilanes de formule générale I, et que l'on procède à l'application des solutions obtenues sur les substrats inorganiques.

5. Utilisation de solutions selon l'une quelconque des revendications 1 à 3 en vue du revêtement de substrats inorganiques.

6. Utilisation selon la revendication 5, dans laquelle les substrats inorganiques sont des substrats en silicium, en dioxyde de silicium et en nitrure de silicium.
